(19) Europäisches Patentamt
European Patent Office
Office européen des brevets

(11) Publication number: **0 301 154 B1**

(12) **EUROPEAN PATENT SPECIFICATION**

(45) Date of publication of patent specification: **16.10.91**

(51) Int. Cl.⁵: **B65H 45/20**, B01D 29/00, B31D 5/00

(21) Application number: **87850237.6**

(22) Date of filing: **27.07.87**

(54) Equipment for folding paper webs and the like.

(43) Date of publication of application:
**01.02.89 Bulletin 89/05**

(45) Publication of the grant of the patent:
**16.10.91 Bulletin 91/42**

(84) Designated Contracting States:
**AT CH DE ES FR GB IT LI NL**

(56) References cited:
**EP-A- 0 200 798**
**DE-C- 144 455**
**US-A- 2 514 801**

(73) Proprietor: **SUNDSTRÖM SAFETY AB**
**Box 10056**
**S-181 10 Lidingö(SE)**

(72) Inventor: **Nilsson, Mats Gustav**
**Knivsta Nedre Kvarn**
**S-741 00 Knivsta(SE)**

(74) Representative: **Ellner, Lars Olof et al**
**AWAPATENT/Bergling & Sundbergh,**
**Sveavägen 13-15, Box 7645**
**S-103 94 Stockholm(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The present invention relates to an apparatus for folding a web of paper or like foldable material along substantially concentric circular arcs. The apparatus comprises two series of feedable cam-shaped folding means. The cams of each series are spaced apart a distance which is approximately twice the distance between the fold locations on the web. The cams of one series are arranged to act against one side of the web, while the cams of the other series are arranged to engage the other side of the web. The cams of the two series are offset a distance equalling the distance between two neighbouring fold locations on the web, whereby, over a distance corresponding to the length along the web over a plurality of folds, said cams of the two series are arranged to increasingly overlap each other for forming a plurality of folds as the web is fed between the cams, and whereby, beyond the distance over which said cams increasingly overlap each other, they are adapted to be quickly removed from the advancing folded web.

US-A-2 514 801 is directed to an apparatus for forming straight fold edges in a web of paper to crimp or corrugate and stack the web in a uniform manner. To apparatus comprises two series of straight, continuous and resiliently suspended folding means interacting to form a plurality of parallell folds in the web. The produced web has a plurality of transverse folds and is for example adapted to be interposed between a pair of covering sheets,

EP-0 200 789 is directed to a device for folding a sheet along concentric circular arcs. The device includes a mold with arc-shaped grooves and a cooperating set of blades to fold the sheet consecutively into a curved corrugation. Each blade is countinuous and is fixed attached to a support.

The apparatus according to the invention renders it possible to rapidly form concentric folds in the web without exposing the web at the same time to the risk of being wrinkled due to the curvature of the folds. Each cam-shaped folding means comprises a plurality of spaced-apart short, straight cam means which area adjustably attached to a common support. This arrangement facilitates adjustment of the cam-shaped folding means so as to optimise the folding effect, and this makes it possible to use the equipment also for folding webs where the concentric circular arcs have quite different radii.

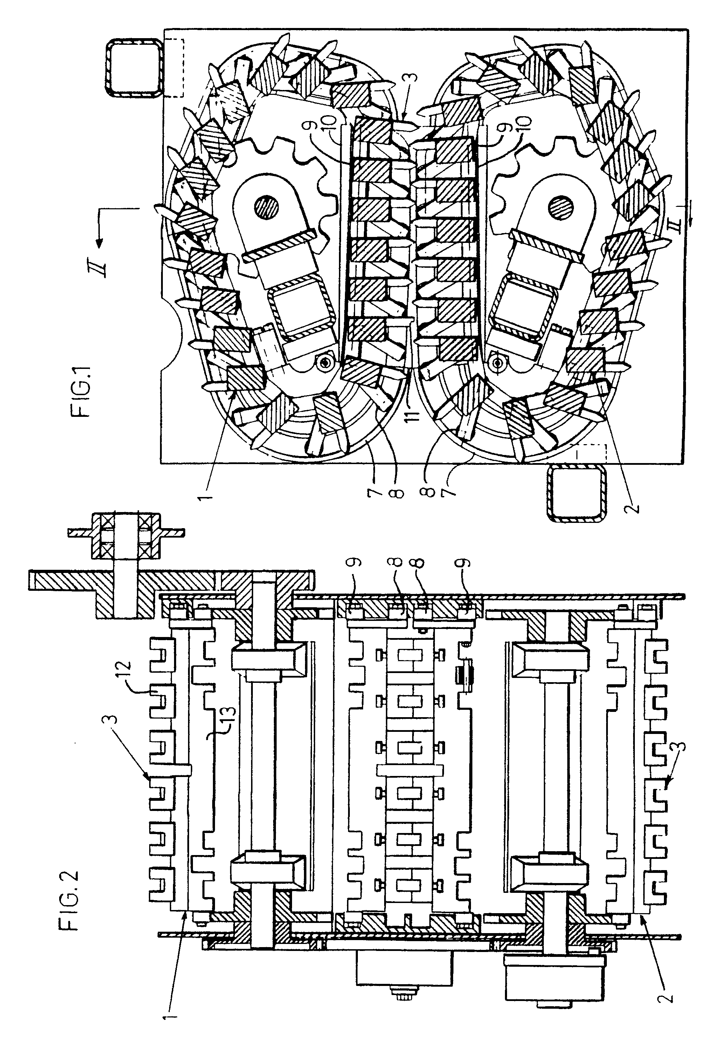

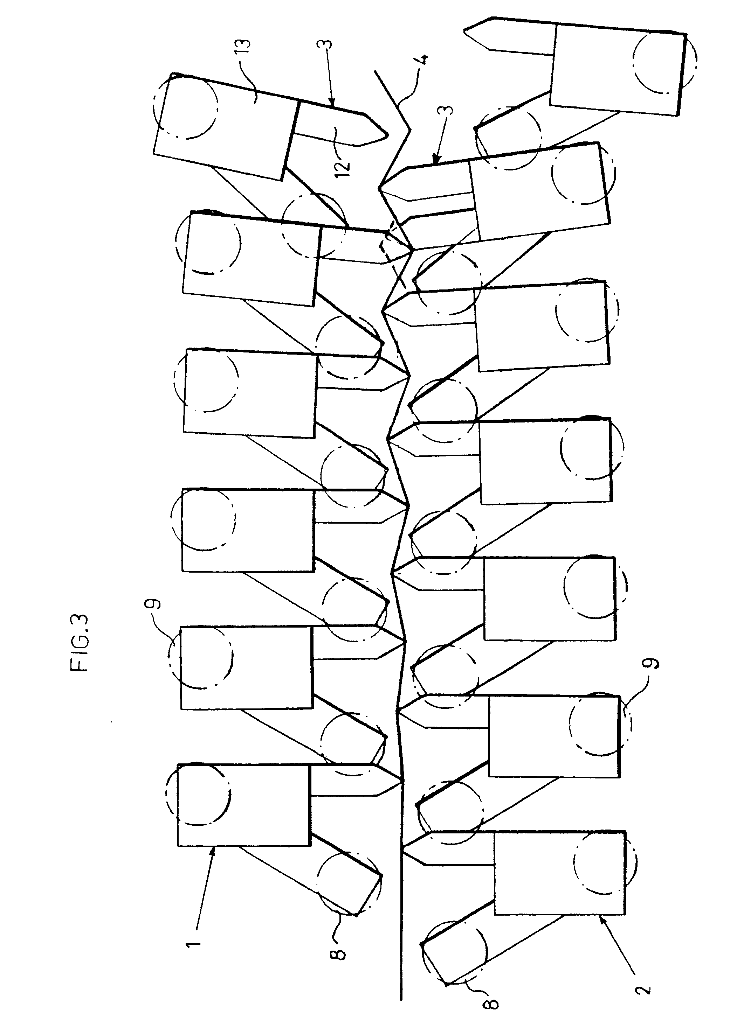

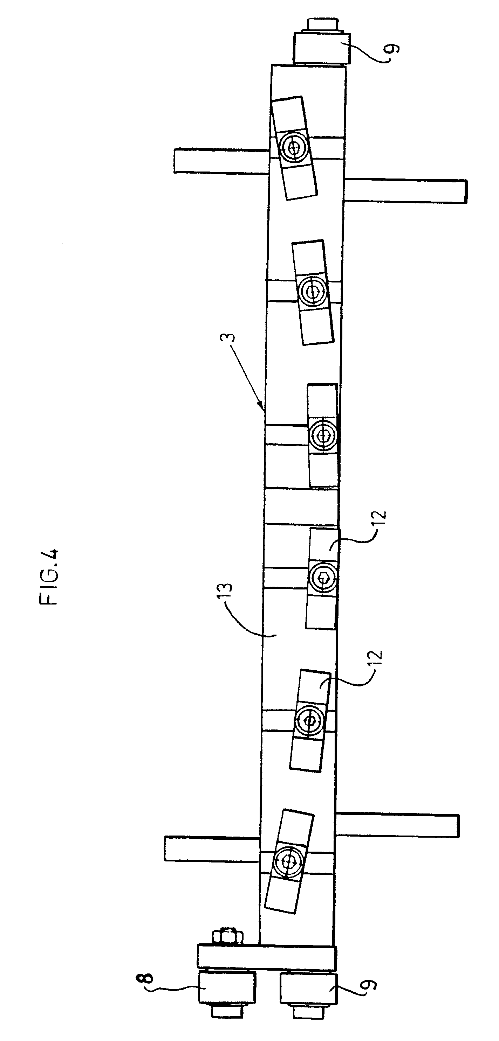

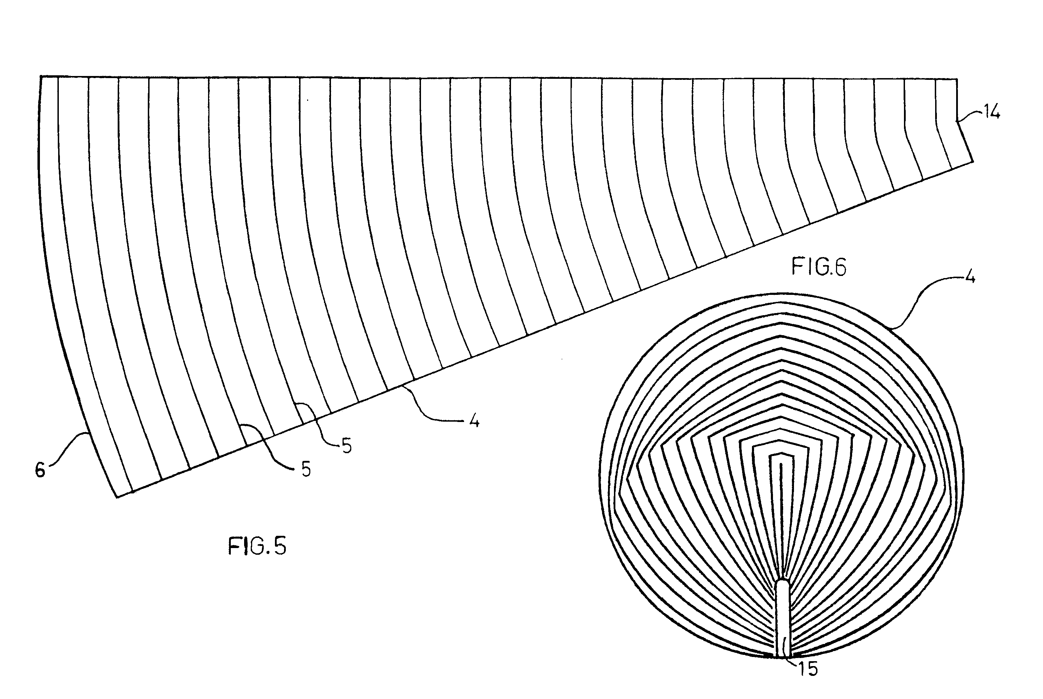

The invention will be described in greater detail below, reference being had to the accompanying drawing which illustrates an embodiment of the equipment and a paper web to be folded thereby. Finally, the web is shown after folding and bending together. Fig. 1 is a longitudinal cross-section of the equipment, while Fig. 2 is a transverse cross-section of the equipment along line II-II in Fig. 1. Fig. 3 is an enlarged lateral view of the cams acting against the web. Fig. 4 is a top plan view of one of the cams. Fig. 5 is a top plan view of the web to be folded. Fig. 6 is a top plan view of the folded and bent web.

The equipment according to the invention, which is a machine, comprises two series 1 and 2 of feedable folding means in the form of cams 3. The cams 3 of each series 1, 2 are spaced apart a distance which is approximately twice the distance between the fold locations 5 on the web 4, as shown in Fig. 5. The cams 3 of the one series 1 are arranged to act against the top face of the web 4, while the cams 3 of the other series 2 are arranged to act against the bottom face of the web 4, the cams 3 of two series 1, 2 being offset a distance equalling the distance between two neighbouring fold locations 5 on the web 4. Furthermore, the cams 3 of the two series 1, 2 are arranged, over a distance whose length corresponds to the web length for a plurality of folds, to increasingly overlap each other, such that a plurality of folds are simultaneously being formed as the web 4 is fed between the cams 3. As shown in Fig. 3, five folds are being formed simultaneously, but the number may vary slightly depending on, inter alia, the material of the web 4 and the curvature of the folds.

As will be best seen from Fig. 3, the cams 3 are, beyond the distance over which they overlap each other increasingly, adapted to be quickly removed from the advancing folded web 4, such that the web, independently of the cams 3, can be further advanced in the machine. According to a preferred embodiment, the machine is, beyond the cams 3 as seen in the feeding direction, provided with a slowly moving anvil with which the folded web 4 gradually comes into engagement. The anvil has substantially the same length as the leading edge 6 of the web 4, and also has substantially the same curvature as the leading edge 6 or the first fold.

Each series 1, 2 of cams 3 is associated with endless chains which are of equal length and synchronously driven. The angular position of the cams 3 relative to the chains is determined by curves 7 cooperating with rollers 8 or the like fixedly connected to the cams 3. As will be further seen from Fig. 1, the cams 3 are provided with rollers 9 which, at least over the distance where they overlap each other increasingly, cooperate with straight rails 10 inclined towards each other.

The webs 4 are drawn in between the cams 3 by a suitable mechanism. Since the cams have different shapes, it is important that the webs 4 are drawn in at the correct location. When the webs 4 are fed into the machine, their leading edge 6 must

thus about a special cam 11. If the web 4 is short, not all the cams 3 need to be used.

As shown in Fig. 4, each cam 3 preferably comprises a plurality of spaced-apart short, straight cam means 12 which are adjustably attached to a common support 13. This arrangement facilitates adjustment of the cams 3 so as to optimise the folding effect, and this of course makes it possible to use the equipment also for folding webs 4 where the concentric circular arcs have quite different radii.

The machine is provided with a support member which, after feeding of the folded web 4, is adapted to press and/or hold the folded web 4 against the anvil. The support member is adapted to engage the centre portion of the trailing edge 14 of the web 4 and preferably is a vertical pin or the like.

The equipment according to the present invention is particularly intended to fold a sheet 4 of filter material which, as shown in Fig. 5, has the form of a sector of a circle, the sector preferably having an angle of 20-25°. The sheet 4, or the web, need not be provided with folding indications 5, although this is preferred. Since the filter must be absolutely tight, the folding indications 5 should be designed such that they do not weaken the sheet 4 proper.

After the folding operation in the machine, the folds are bent together such that their ends abut each other as shown in Fig. 6. In this manner, the sheet 4 of filter material is given a circular form for mounting in a circular filter holder. To make the filter absolutely tight, the space 15 between the ends of the folds is filled with glue or the like. The steps described above can be performed separately or in a machine modified such that the filters in their holders are manufactured fully automatically. Since each filter must be tested for tightness, this testing should also take place in the machine.

The invention is not limited to the above disclosure, but can be modified within the scope of the appended claims.

## Claims

1. An apparatus for folding a web (4) of paper or like foldable material along substantially concentric circular arcs, said apparatus comprising two series (1,2) of feedable cam-shaped folding means (3), the cams (3) of each series (1,2) being spaced apart a distance which is approximately twice the distance between the fold locations (5) on the web (4), and the cams (3) of one series (1) being arranged to act against one side of the web (4), while the cams (3) of the other series (2) are arranged to engage the other side of the web (4), the cams (3) of the two series (1,2) being offset a distance equalling the distance between two neighbouring fold locations (5) on the web (4), whereby, over a distance corresponding to the length along the web over a plurality of folds, said cams (3) of the two series (1,2) are arranged to increasingly overlap each other for forming a plurality of folds as the web (4) is fed between the cams (3), and whereby, beyond the distance over which said cams (3) increasingly overlap each other, they are adapted to be quickly removed from the advancing folded web (4), **characterized** in that each cam-shaped folding means (3) comprises a plurality of spaced-apart short cam means (12) adjustably attached to a common support (13).

2. An apparatus as claimed in claim 1, **characterized** in that the cams (3) are arranged to follow straight rails (10) inclined towards each other.

3. An apparatus as claimed in claim 1, or 2, **characterized** in that said cams (3) are associated with synchrononously driven endless chains, the angular position of said cams (3) relative to the chains being determined by curves (7) cooperating with rollers (8) or the like fixedly connected to said cams (3).

4. An apparatus as claimed in any one of claims 1-3, **characterized** in that it is provided, in front of the advancing folded web (4), with an anvil for the web.

5. The apparatus as claimed in claim 4, **characterized** in that said anvil, which preferably has a curvature corresponding to that of the folded web (4), is adapted to be advanced in the feeding direction at a slower rate than said web (4).

6. An apparatus as claimed in claim 4 or 5 **characterized** in that it is provided with a support member which, after feeding of the folded web (4), is adapted to press and/or hold the folded web (4) against the anvil.

7. An apparatus as claimed in claim 6, **characterized** in that said support member is adapted to engage the centre (14) of said folded web (4).

## Revendications

1. Machine destinée à plisser une bande (4) de papier ou matière plissable équivalents le long d'arcs de cercles sensiblement concentriques, ladite machine comprenant deux séries (1, 2) de moyens de plissage (3) en forme de cames, qui peuvent être animés d'un mouvement de défilement, les cames (3) de chaque série (1, 2) étant espacées d'une distance qui est approximativement le double de la distance entre les emplacements de plis (5) sur la bande (4), et les cames (3) d'une série (1) étant agencées pour agir sur une face de la bande (4) tandis que les cames (3) de l'autre série (2) sont agencées pour attaquer l'autre face de la bande (4), les cames (3) des deux séries (1, 2) étant décalées d'une distance qui est égale à la distance entre deux emplacements de plis (5) voisins sur la bande (4), lesdites cames (3) des deux séries (1, 2) étant agencées pour se recouvrir mutuellement avec un amplitude qui croît progressivement sur une distance qui correspond à la longueur mesurée sur la bande sur une pluralité de plis, afin de former une pluralité de plis lorsque la bande (4) est introduite entre les cames (3) et, les cames étant adaptées pour s'écarter rapidement de la bande plissée (4) en défilement au-delà de la distance sur laquelle lesdites cames (3) se recouvrent mutuellement avec une amplitude croissante, caractérisée en ce que chaque moyen de plissage (3) en forme de came est composé d'une pluralité d'éléments de cames (12) courts et espacés, qui sont fixés à un support commun (13) dans des positions réglables.

2. Machine selon la revendicationn 1, caractérisée en ce que les cames (3) sont agencées pour suivre des rails rectilignes (10) inclinés l'un vers l'autre.

3. Machine selon la revendication 1 ou 2, caractérisée en ce que lesdites cames (3) sont associées à des chaînes sans fin entraînées en synchronisme, la position angulaire desdites cames (3) par rapport aux chaînes étant déterminée par des profils de cames (7) qui coopèrent avec des galets (8) ou équivalents fixés auxdites cames (3) dans une position fixe.

4. Machine selon une quelconque des revendications 1 à 3, caractérisée en ce qu'elle est équipée d'une enclume pour la bande en avant de la bande plissée (4) en défilement.

5. Machine selon la revendication 4, caractérisée en ce que ladite enclume, qui possède de préférence une courbure qui correspond à celle de la bande plissée (4), est adaptée pour être entraînée en mouvement d'avance dans la direction du défilement à une vitesse inférieure à celle de ladite bande (4).

6. Machine selon la revendication 4 ou 5, caractérisée en ce qu'elle est équipée d'un élément support qui, après l'acheminement de la bande plissée (4) est adapté pour presser et/ou tenir la bande plissée (4) contre l'enclume.

7. Machine selon la revendication 6, caractérisée en ce que ledit élément support est adapté pour attaquer le centre (14) de ladite bande plissée (4).

**Patentansprüche**

1. Vorrichtung zum Falten von Papierbändern (4) oder ähnlichen, faltbaren Materialbahnen, längs hauptsächlich konzentrischer, kreisförmiger Bögen, mit zwei Gruppen (1, 2) von verschiebbaren, nockenförmigen Falzorganen (3), wobei die Nocken (3) jeder Gruppe (1, 2) in einem gegenseitigen Abstand liegen, der etwa dem doppelten Abstand zwischen den Faltstellen (5) der Bahn (4) entspricht, die Nocken (3) einer Gruppe (1) die eine Seite der Bahn (4) und die Nocken (3) der anderen Gruppe (2) die andere Seite der Bahn (4) beaufschlagen, die Nocken (3) beider Gruppen (1, 2) gegenseitig entsprechend dem Abstand zweier benachbarter Faltstellen (5) in der Bahn (4) versetzt sind und sich längs der Bahn über einen mehreren Faltstellen entsprechenden Abstand zunehmend gegenseitig überlappen, um eine Mehrzahl von Falten zu bilden, wenn die Bahn (4) zwischen den Nocken (3) hindurchläuft, und wobei sich die Nocken (3) hinter der Strecke, auf der sie sich gegenseitig zunehmend überlappen, rasch von der durchlaufenden gefalteten Bahn (4) zurückziehen, dadurch **gekennzeichnet,** dass jedes nockenförmige Falzorgan (3) eine Mehrzahl von gegenseitig beabstandeten kurzen Nockenmitteln (12) aufweist, die einstellbar an einem gemeinsamen Träger (13) befestigt sind.

2. Vorrichtung nach Anspruch 1, dadurch **gekennzeichnet,** dass die Nocken (3) so angeordnet sind, dass sie geraden, aufeinander zu geneigten Schienen (10) folgen.

3. Vorrichtung nach Anspruch 1 oder 2, dadurch **gekennzeichnet,** dass die Nocken (3) synchron angetriebenen, endlosen Ketten zugeordnet sind und dass die Winkelstellung der Nocken (3) gegenüber den Ketten durch fest mit den Nocken (3) verbundene Kurven (7) bestimmt ist, die mit Rollen (8) o.dgl. zusammenwirken.

4. Vorrichtung nach einem der Ansprüche 1-3, dadurch **gekennzeichnet,** dass sie vor der vorlaufenden, gefalteten Bahn (4) mit einem Reitel für die Bahn versehen ist.

5. Vorrichtung nach Anspruch 4, dadurch **gekennzeichnet,** dass der Reitel vorzugsweise eine der Kurvatur der gefalteten Bahn (4) entsprechende Form hat und in Vorschubrichtung mit geringerer Geschwindigkeit als die Bahn (4) vorgeschoben wird.

6. Vorrichtung nach Anspruch 4 oder 5, dadurch **gekennzeichnet,** dass sie mit einem Trägerorgan versehen ist, welches nach dem Vorschieben der gefalteten Bahn (4) die gefaltete Bahn (4) gegen den Reitel presst und/oder hält.

7. Vorrichtung nach Anspruch 6, dadurch **gekennzeichnet,** dass das Trägerorgan mit der Mitte (14) der gefalteten Bahn (4) in Eingriff kommt.

FIG.1

FIG.2

FIG.3

FIG.4

8

9

13

3

12

12

9

EP 0 301 154 B1

FIG.5

FIG.6

EP 0 301 154 B1